# EUROPÄISCHE PATENTSCHRIFT

(11) **EP 0 745 107 B1**
(45) Veröffentlichungstag und Bekanntmachung des Hinweises auf die Patenterteilung: **04.11.1998**
(21) Anmeldenummer: 95911236.8
(22) Anmeldetag: 15.02.1995
(51) Int. Cl.: C09B 23/04, C09B 23/10, C09B 55/00, B41M 5/38

(54) **TRIAZOLOPYRIDINFARBSTOFFE**
TRIAZOLOPYRIDINE DYES
COLORANTS DE TRIAZOLOPYRIDINE

(30) Priorität: 18.02.1994 DE 4405167
(43) Veröffentlichungstag der Anmeldung: 04.12.1996
(73) Patentinhaber: BASF AKTIENGESELLSCHAFT, 67056 Ludwigshafen (DE)
(72) Erfinder: SENS, Rüdiger, D-68165 Mannheim (DE); SCHEFCZIK, Ernst, D-67069 Ludwigshafen (DE); REICHELT, Helmut, D-67435 Neustadt (DE); ETZBACH, Karl-Heinz, D-67227 Frankenthal (DE)
(86) Internationale Anmeldenummer: EP9500564
(87) Internationale Veröffentlichungsnummer: WO9522581

(56) Entgegenhaltungen:
- EP-A- 0 413 226
- EP-A- 0 416 434
- WO-A-95/04733
- WO-A-95/06687
- WO-A-95/21219
- DE-A- 2 305 617
- DE-A- 3 829 918

## Beschreibung

Die vorliegende Erfindung betrifft neue Triazolopyridinfarbstoffe der Formel I 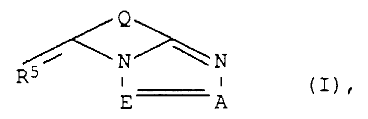 in der
- A: Stickstoff,
- E: einen Rest der Formel C-R¹, worin R¹ für C₁-C₂₀-Alkyl, das gegebenenfalls substituiert ist und durch 1 bis 4 Sauerstoffatome in Etherfunktion unterbrochen sein kann, gegebenenfalls substituiertes Phenyl, Mercapto oder gegebenenfalls substituiertes C₁-C₂₀-Alkylthio steht,
- Q: einen Rest der Formel 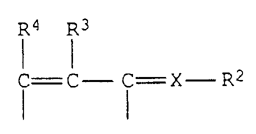 oder 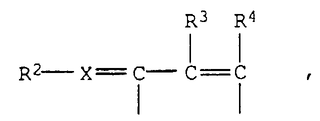 worin
R² für einen 5- oder 6-gliedrigen carbocyclischen oder heterocyclischen Rest, der benzoanelliert sein kann,
R³ für C₁-C₄-Alkyl, das gegebenenfalls durch ein Sauerstoffatom in Etherfunktion unterbrochen ist, C₁-C₄-Halogenalkyl, C₁-C₄-Alkoxycarbonyl oder gegebenenfalls substituiertes Phenyl,
- R⁴: für Cyano, Carbamoyl, Carboxyl, C₁-C₄-Alkoxycarbonyl oder Benzthiazolyl oder R³ und R⁴ zusammen für den Rest eines anellierten Benzorings und
- X: für CH oder Stickstoff stehen, und
- R⁵: Sauerstoff oder einen Rest der Formel

C(CN)₂,

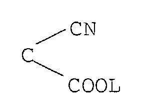

oder C(COOL)₂
bedeuten, wobei L jeweils für C₁-C₈-Alkyl, das gegebenenfalls durch 1 oder 2 Sauerstoffatome in Etherfunktion unterbrochen ist, steht, mit der Maßgabe, daß wenn
- Q: den Rest der Formel 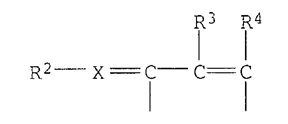 bedeutet, die beiden Reste A und E auch gegeneinander vertauscht sein können,
sowie ein Verfahren zum thermischen Transfer dieser Farbstoffe.

Aus der US-A-5 079 365 und der WO-A-95/21219 sind Triazolopyridinfarbstoffe bekannt, denen ein anderes Ringsystem zugrundeliegt.

Aufgabe der vorliegenden Erfindung war es nun, neue Triazolopyridinfarbstoffe mit anderer chemischer Struktur bereitzustellen. Sie sollten in einfacher Weise herzustellen sein.

Demgemäß wurden die eingangs näher bezeichneten Triazolopyridinfarbstoffe der Formel I gefunden.

Die Farbstoffe der Formel I können in mehreren tautomeren Formen auftreten, die alle von den Patentansprüchen umfaßt werden. Beispielsweise können die Verbindungen mit R³ = Methyl und R⁵ = Sauerstoff u.a. in folgenden tautomeren Formen auftreten:

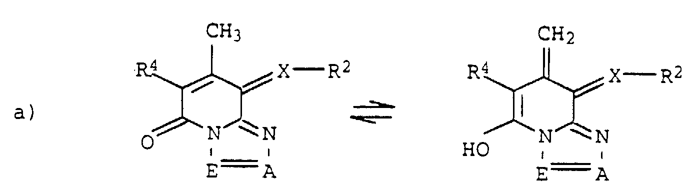

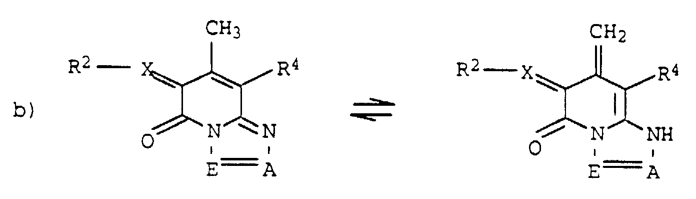

R² stellt einen 5- oder 6-gliedrigen carbocyclischen oder heterocyclischen Rest dar, der gegebenenfalls substituiert ist und benzoanelliert sein kann.

Reste R² können sich z.B. von Komponenten aus der Benzol-, Indol-, Chinolin-, Aminonaphthalin-, Pyrrol-, Aminothiazol-, Benzimidazol-, Benzthiazol-, Aminothiophen- oder Diaminopyridinreihe ableiten.

Wichtige Reste R² sind z.B. solche der Formeln IIa bis IIj 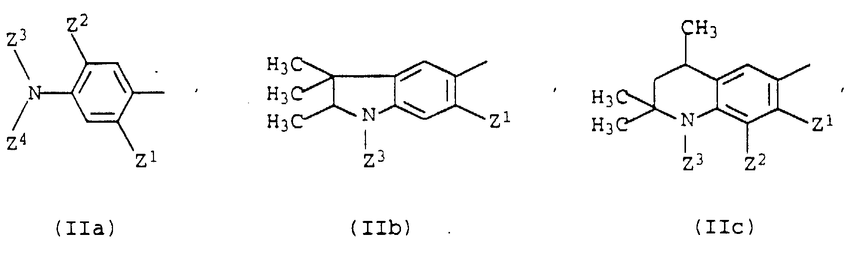 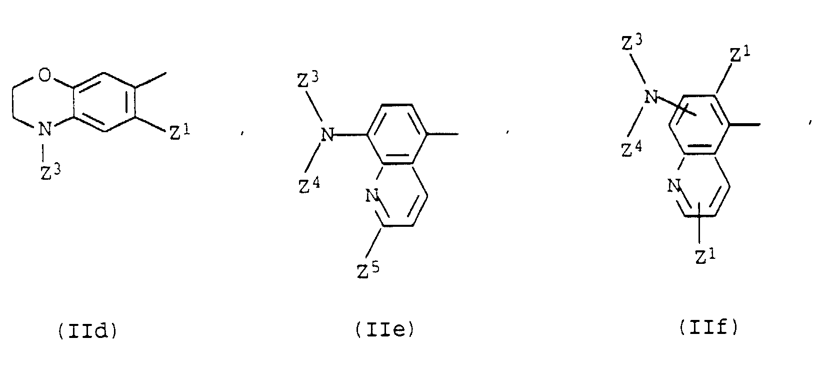 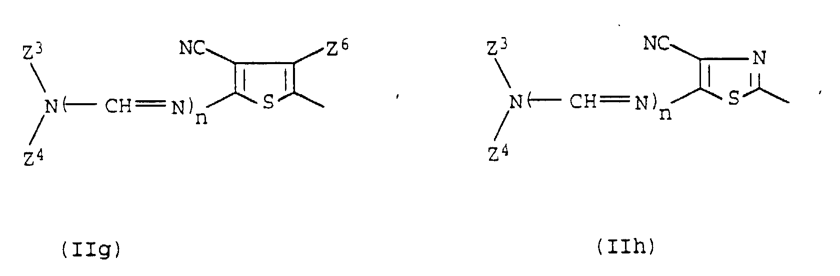 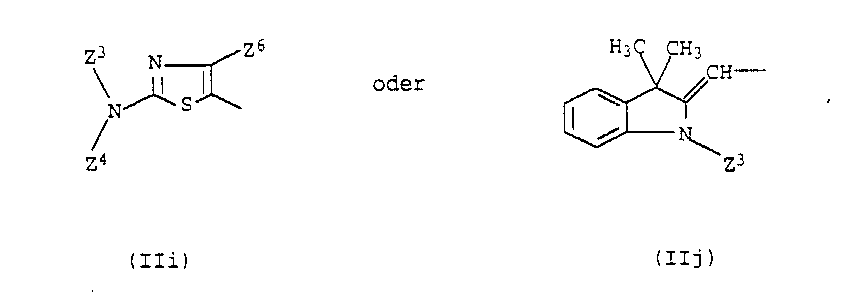 worin
- n: für 0 oder 1,
- Z¹: für Wasserstoff, C₁-C₈-Alkyl, das gegebenenfalls durch 1 oder 2 Sauerstoffatome in Etherfunktion unterbrochen ist, Hydroxy, C₁-C₄-Alkoxy, insbesondere Methoxy oder Ethoxy, Formylamino, C₁-C₄-Alkylsulfonylamino, C₁-C₄-Mono- oder Dialkylaminosulfonylamino oder den Rest -NHCOZ⁷ oder -NHCO₂Z⁷, wobei Z⁷ die Bedeutung von Phenyl, Benzyl, Tolyl oder C₁-C₈-Alkyl, das gegebenenfalls durch 1 oder 2 Sauerstoffatome in Etherfunktion unterbrochen ist, besitzt,
- Z²: für Wasserstoff, C₁-C₄-Alkyl, insbesondere Methyl, oder C₁-C₄-Alkoxy, insbesondere Methoxy oder Ethoxy,
- Z³ und Z⁴: gleich oder verschieden sind und unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, gegebenenfalls substituiertes Phenyl oder zusammen mit dem sie verbindenden Stickstoffatom für einen fünf- oder sechsgliedrigen gesättigten heterocyclischen Rest, der gegebenenfalls weitere Heteroatome enthält,
- Z⁵: für Wasserstoff oder C₁-C₄-Alkyl, insbesondere Methyl, und
- Z⁶: für Wasserstoff, Halogen, C₁-C₈-Alkyl, gegebenenfalls substituiertes Phenyl, gegebenenfalls substituiertes Benzyl, Cyclohexyl, Thienyl, Hydroxy, C₁-C₄-Alkoxy, C₁-C₄-Alkylthio oder C₁-C₈-Monoalkylamino stehen.

Alle in den obengenannten Formeln auftretenden Alkyl- und Alkenylgruppen können sowohl geradkettig als auch verzweigt sein

Wenn in den obengenannten Formeln substituierte Alkylreste auftreten, so können als Substituenten z.B. gegebenenfalls substituiertes Phenyl, gegebenenfalls substituiertes Phenoxy, Carboxyl, C₁-C₂₀-Alkoxycarbonyl, dessen Alkylkette gegebenenfalls durch 1 bis 4 Sauerstoffatome in Etherfunktion unterbrochen und durch Phenyl oder Phenoxy substituiert sein kann, Cyano, C₁-C₆-Alkanoyloxy, C₁-C₄-Alkylaminocarbonyloxy oder C₁-C₄-Alkoxycarbonyloxy, wobei im letzten Fall die Alkoxygruppe durch Phenyl oder C₁-C₄-Alkoxy substituiert sein kann, in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind solche Alkylreste bevorzugt, die durch 1 oder 2 Sauerstoffatome in Etherfunktion unterbrochen sind.

Wenn in den obengenannten Formeln substituierte Phenylreste auftreten, so können als Substituenten z.B. C₁-C₄-Alkyl, C₁-C₄-Alkoxy, Halogen, dabei insbesondere Chlor oder Brom, Nitro oder Carboxyl in Betracht kommen. Die Phenylreste weisen dabei in der Regel 1 bis 3 Substituenten auf.

Geeignete Reste L, R¹, R³, Z¹, Z², Z³, Z⁴, Z⁵, Z⁶ und Z⁷ sind z.B. Methyl, Ethyl, Propyl, Isopropyl, Butyl, Isobutyl, sec-Butyl oder tert-Butyl.

Reste L, R¹, Z¹, Z³, Z⁴, Z⁶ und Z⁷ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste R¹ sind weiterhin z.B. Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl oder Eicosyl. (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. Al, Seiten 290 bis 293, sowie Vol. A 10, Seiten 284 und 285)).

Reste L, R¹, Z¹, Z³, Z⁴ und Z⁷ sind weiterhin z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, oder 4,8-Dioxadecyl.

Reste R¹ sind weiterhin z.B. 3,6,9-Trioxadecyl, 3,6,9-Trioxaundecyl, 3,6,9,12-Tetraoxatridecyl, 3,6,9,12-Tetraoxatetradecyl, Methylthio, Ethylthio, Propylthio, Isopropylthio, Butylthio, Isobutylthio, sec-Butylthio, Pentylthio, Isopentylthio, Neopentylthio, tert-Pentylthio, Hexylthio, Heptylthio, 1-Ethylpentylthio, Octylthio, Isooctylthio, 2-Ethylhexylthio, Nonylthio, Isononylthio, Decylthio, Isodecylthio, Undecylthio, Dodecylthio, Tridecylthio, Isotridecylthio, Tetradecylthio, Pentadecylthio, Hexadecylthio, Heptadecylthio, Octadecylthio, Nonadecylthio oder Eicosylthio.

Reste R¹, R³, Z³, Z⁴ und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2-, 3- oder 4-Nitrophenyl oder 2-, 3- oder 4-Carboxylphenyl,

Reste R¹, Z³ und Z⁴ sind weiterhin z.B. 2-Carboxyethyl, 2-Methoxycarbonylethyl, Benzyl, 1- oder 2-Phenylethyl, 2-, 3- oder 4-Methylbenzyl, 2-, 3- oder 4-Methoxybenzyl, 2-, 3- oder 4-Chlorbenzyl, 2-, 3- oder 4-Nitrobenzyl, 3-Benzyloxypropyl, Phenoxymethyl, 6-Phenoxy-4-oxahexyl, 8-Phenoxy-4-oxaoctyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methylaminocarbonyloxyethyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste Z³ und Z⁴ sind weiterhin z.B. Cyclopentyl, Cyclohexyl, Cycloheptyl, Allyl oder Methallyl.

Reste Z1 sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste Z⁶ sind weiterhin, z.B. Fluor, Chlor, Brom, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino, 2-Ethylhexylamino, Methylthio, Ethylthio, Propylthio, Isopropylthio oder Butylthio.

Reste Z¹, Z² und Z⁶ sind weiterhin z.B. Methoxy, Ethoxy, Propoxy, Isopropoxy, Butoxy, Isobutoxy, sec-Butoxy oder tert-Butoxy.

Wenn Z³ und Z⁴ zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Reste R⁴ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste R³ sind weiterhin z.B. Methoxymethyl, Ethoxymethyl, 2-Methoxyethyl, 2-Ethoxyethyl, Methoxycarbonyl, Ethoxycarbonyl, Propoxycarbonyl, Butoxycarbonyl, Fluormethyl, Chlormethyl, Difluormethyl, Dichlormethyl, Trifluormethyl, Trichlormethyl, 2-Fluorethyl, 2-Chlorethyl, 2,2,2-Trifluorethyl, Pentafluorethyl oder Heptafluorpropyl.

Bevorzugt sind Triazolopyridinfarbstoffe der Formel I, in der R4 Cyano bedeutet.

Weiterhin bevorzugt sind Triazolopyridinfarbstoffe der Formel I, in der R³ C₁-C₄-Alkyl, insbesondere Methyl, bedeutet.

Weiterhin bevorzugt sind Triazolopryridinfarbstoffe der Formel I, in der R¹ C₁-C₁₂-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, oder gegebenenfalls substituiertes Phenyl, bedeutet.

Insbesondere bevorzugt sind Triazolopyridinfarbstoffe der Formel I, in der R¹ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin insbesondere bevorzugt sind Triazolopyridinfarbstoffe der Formel I, in der R² einen Rest der obengenannten Formel IIa, IIc oder IIi bedeutet, wobei
- Z¹: für Wasserstoff, C₁-C₄-Alkyl, C₁-C₄-Alkoxy oder C₁-C₈-Alkanoylamino,
- Z²: für Wasserstoff, Methyl, Methoxy oder Ethoxy,
- Z³ und Z⁴: unabhängig voneinander jeweils für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder Phenyl und
- Z⁶: für Wasserstoff, C₁-C₈-Alkyl, gegebenenfalls durch C₁-C₄-Alkyl oder C₁-C₄-Alkoxy substituiertes Phenyl, Benzyl oder Thienyl stehen.

Die erfindungsgemäßen Farbstoffe der Formel I können nach an sich bekannten Methoden hergestellt werden.

Beispielsweise können diejenigen Triazolopyridinfarbstoffe der Formel I, in der X CH bedeutet, durch Kondensation von Aldehyden der Formel III

R²-CHO (III),

in der R² die obengenannte Bedeutung besitzt mit Triazolopyridinen der Formel IVa, IVb oder IVc 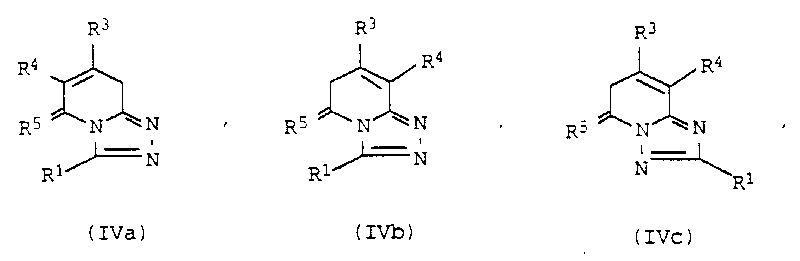 in denen R¹, R³, R⁴ und R⁵ jeweils die obengenannte Bedeutung besitzen, erhalten werden.

Diejenigen Triazolopyridinfarbstoffe der Formel I, in der X Stickstoff bedeutet, können z.B. durch Kondensation von Nitrosoverbindungen der Formel V

R²―NO (V),

in der R² die obengenannte Bedeutung besitzt, oder durch oxidative Kupplung von Aminoverbindungen der Formel VI

R²―NH² (VI),

in der R² die obengenannte Bedeutung besitzt, mit den Triazolopyridinen IVa, IVb oder IVc erhalten werden.

Es ist jedoch auch möglich, die Triazolopyridine der Formel IVd, IVe, IVf, IVg, IVh oder IVi 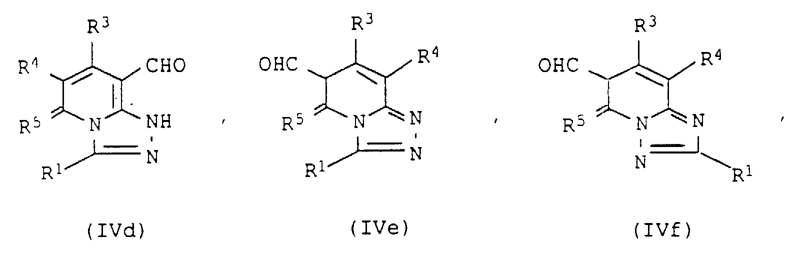 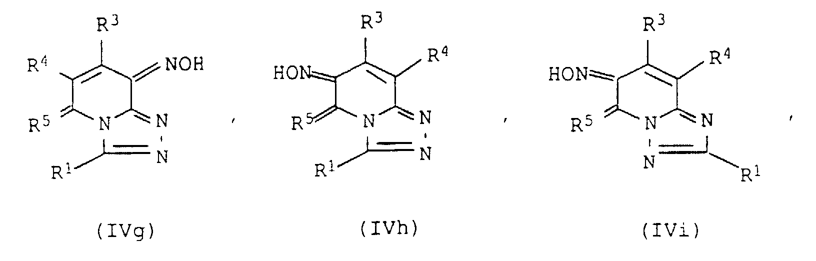 in denen R¹, R³, R⁴ und R⁵ jeweils die obengenannte Bedeutung besitzen, mit Verbindungen der Formel VII

R²-H (VII),

in der R² die obengenannte Bedeutung besitzt, gemäß dem in der älteren deutschen Patentanmeldung P 44 03 083.5 beschriebenen Verfahren zu kondensieren.

Die Triazolopyridine der Formel IV sind z.B. in der älteren Patentanmeldung PCT/EP 94/02233 oder in der US-A-5 101 028 beschrieben oder können nach den dort genannten oder auch in der älteren deutschen Patentanmeldung P 44 03 083.5 genannten Methoden erhalten werden.

Ein weiterer Gegenstand der vorliegenden Erfindung ist ein Verfahren zur Übertragung von Farbstoffen von einem Träger auf ein mit Kunststoff beschichtetes Papier durch Diffusion oder Sublimation mit Hilfe einer Energiequelle, das dadurch gekennzeichnet ist, daß man einen Träger verwendet, auf dem sich ein oder mehrere Triazolopyridinfarbstoffe der Formel I befinden.

Zur Herstellung der für das erfindungsgemäße Verfahren benötigten Farbstoffträger werden die Farbstoffe der Formel I in einem geeigneten organischen Lösungsmittel oder in Mischungen von Lösungsmitteln mit einem oder mehreren Bindemitteln, gegebenenfalls unter Zugabe von Hilfsmitteln zu einer Druckfarbe verarbeitet. Diese enthält die Farbstoffe der Formel I vorzugsweise in molekular-dispers gelöster Form. Die Druckfarbe kann mittels einer Rakel auf den inerten Träger aufgetragen und die Färbung z.B. an der Luft oder mit einem Föhn getrocknet werden. Geeignete organische Lösungsmittel für die Farbstoffe der Formel I sind z.B. solche, in denen die Löslichkeit der Farbstoffe der Formel I bei einer Temperatur von 20°C größer als 1 Gew.-%, vorzugsweise größer als 5 Gew.-% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, die in organischen Lösungsmitteln löslich sind und die die Farbstoffmischungen an den inerten Träger abriebfest zu binden vermögen. Dabei werden solche Bindemittel bevorzugt, die die Farbstoffmischung nach Trocknung der Druckfarbe an der Luft in Form eines klaren, transparenten Films aufnehmen, ohne das dabei eine sichtbare Auskristallisation der Farbstoffmischung auftritt.

Solche Bindemittel sind beispielsweise in der US-A-5 132 438 oder in den entsprechenden dort zitierten Patentanmeldungen genannt. Darüber hinaus sind gesättigte lineare Polyester zu nennen.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis Bindemittel : Farbstoff beträgt im allgemeinen 1 : 1 bis 10 : 1.

Als Hilfsmittel kommen z.B. Trennmittel in Betracht, wie sie in der US-A-5 132 438 oder den entsprechenden dort zitierten Patentanmeldungen genannt sind. Darüber hinaus sind besonders organische Additive zu nennen, welche das Auskristallisieren der Transferfarbstoffe bei Lagerung oder beim Erhitzen des Farbbandes verhindern, z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe der Formel I zeichnen sich beim Farbstofftransfer durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit, eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (höchst mögliche Brillanz von Grund- oder Mischfarben und tiefes neutrales Schwarz).

Die erfindungsgemäßen Farbstoffe der Formel I eignen sich weiterhin vorteilhaft zum Färben von synthetischen Materialien, z.B. von Polyestern, Polyamiden oder Polycarbonaten. Insbesondere zu nennen sind Materialien in textiler Form, wie Fasern, Garne, Zwirne, Maschenware, Webware oder Non-wovens aus Polyester oder Polyamid oder Polyester-Baumwolle-Mischgewebe.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden Beispiele sollen die Erfindung näher erläutern.

### A) Herstellung

### Beispiel 1

Zu 30 ml Acetanhydrid wurden 17,8 g 2-Dibutylamino-4-phenyl-5-formylthiazol und 10,8 g Triazolopyridon der Formel 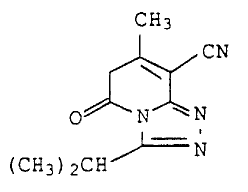 gegeben. Man erhitzte 5 min unter Rückfluß und kühlte dann auf Raumtemperatur ab. Der gebildete Farbstoff der Formel 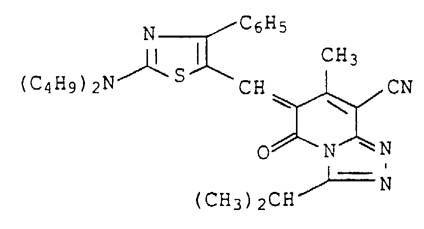 wurde abgesaugt, mit Methanol gewaschen und getrocknet. (Ausbeute: 20,9 g; λₘₐₓ in CH₂Cl₂: 561 nm; Fp.: 202°C)

### Beispiel 2

9,6 g 3-Methyl-N-butyl-N-ethylanilin wurden in 50 ml Wasser und 25 ml konz. Salzsäure gelöst und auf 0 bis 5°C gekühlt. Dazu tropfte man 20 ml 23 gew.-%ige wäßrige Natriumnitritlösung und rührte 2 h bei 0 bis 5°C nach.

Die so gewonnene Nitrosoverbindung wurde mit 25 gew.-%igem Ammoniakwasser auf einen pH-Wert von 8 gestellt und mit Ethylacetat ausgeschüttelt.

Die organische Phase ließ man in ein Gemisch von 14,7 g des in Beispiel 1 genannten Triazolopyridons und 30 ml Acetanhydrid laufen. Ethylacetat wurde dann bis zum Erreichen einer Innentemperatur von 100°C abdestilliert. Danach wurde auf Raumtemperatur abgekühlt. Der gebildete Niederschlag wurde abgesaugt, mit Methanol gewaschen und getrocknet. Man erhielt 14,9 g des Farbstoffs der Formel 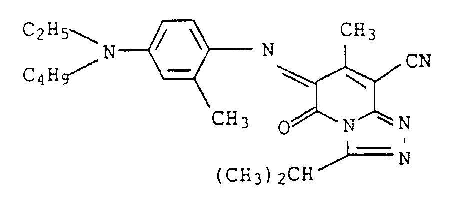 (λₘₐₓ in CH₂Cl₂: 676 nm, in Tetrahydrofuran (THF): 661 nm)

### Beispiel 3

Zu 25 ml Acetanhydrid wurden 9,8 g 2-Dibutylamino-4-phenyl-5-formylthiazol und 10,8 g Triazolopyridon der Formel 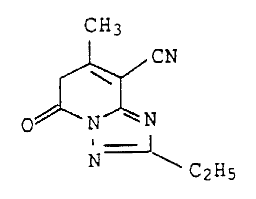 gegeben. Man erhitzte 15 min unter Rückfluß und kühlte dann auf Raumtemperatur ab. Der gebildete Farbstoff der Formel 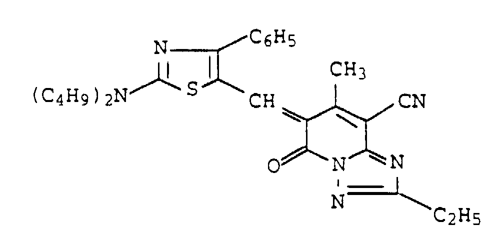 wurde abgesaugt, mit Methanol gewaschen und getrocknet. (Ausbeute: 9,3 g; λₘₐₓ in THF: 563 nm; Fp.: 212°C)

### Beispiel 4

5,8 g 3-Diethylamino-N-acetylanilin wurden in 100 ml konz. Salzsäure gelöst und auf 0 bis 5°C gekühlt. Dazu tropfte man 9 ml 23 gew.-%ige wäßrige Natriumnitritlösung und rührte 2 h bei 0 bis 5°C nach.

Die so gewonnene Nitrosoverbindung wurde mit 25 gew.-%igem Ammoniakwasser auf einen pH-Wert von 8 gestellt und mit Ethylacetat ausgeschüttelt.

Die organische Phase wurde eingeengt, mit 350 ml Methanol aufgenommen und mit 5 g Raney-Nickel versetzt. Danach wurde Wasserstoff aufgepreßt. Nachdem kein Wasserstoff mehr aufgenommen wurde, wurde der Katalysator abfiltriert und die Lösung eingeengt.

Die resultierende konzentrierte Lösung wurde in ein Gemisch aus 6,6 g des Triazolopyridons der Formel 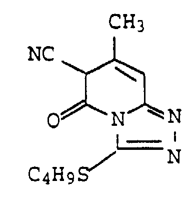 50 ml Ethanol und 50 ml Ethylacetat eingetragen.

Zu diesem Gemisch wurde zunächst eine Lösung von 4,1 g Natriumacetat (wasserfrei) in 50 ml Wasser gegeben und anschließend eine Lösung von 5,7 g Ammoniumperoxodisulfat in 50 ml Wasser getropft. Es wurde 1 h bei Raumtemperatur nachgerührt. Danach wurde abgesaugt, mit Ethanol und Wasser gewaschen und getrocknet. Man erhielt 5,22 g des Farbstoffs der Formel 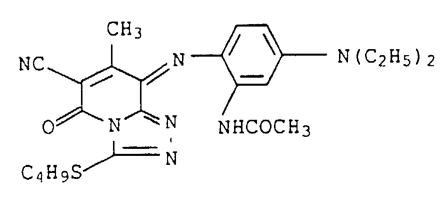 (λₘₐₓ in CH₂Cl₂: 647 nm, in THF: 636 nm; Fp.: 201°C)

### Beispiel 5

a) 40,8 g der Verbindung der Formel 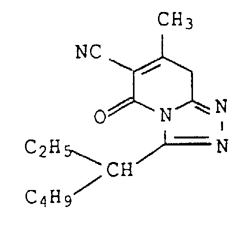 wurden bei 100°C in 900 ml Eisessig gelöst. Die Lösung wurde auf 50°C abgekühlt und mit 480 ml konz. Salzsäure versetzt. Bei 0 bis 5°C wurden dann 48 ml 23 gew.-%ige wäßrige Natriumnitritlösung zugetropft und 3 h bei 0 bis 5°C nachgerührt. Anschließend wurde auf 3 1 Wasser ausgetragen, abgesaugt, mit Wasser gewaschen und getrocknet. Man erhielt 40,8 g des Produkts der Formel 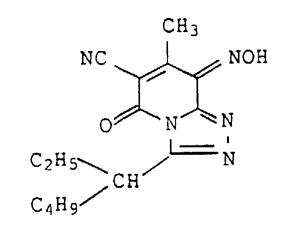
b) 8,3 g 86,5 gew.-%iges 2-(Di-sec-butylamino)-4-phenylthiazol und 7,5 g der unter a) beschriebenen Verbindung wurden in 10 ml Eisessig und 10 ml Propionsäure 15 min unter Rückfluß erhitzt: Nach dem Abkühlen wurde das Reaktionsgemisch über Kieselgel gereinigt (Laufmittel: Toluol/Essigester 2 : 2 v/v). Man erhielt 7,53 g des Farbstoffs der Formel 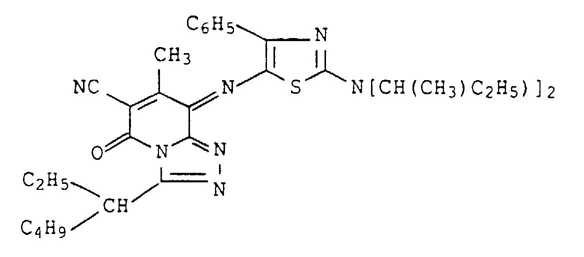 λₘₐₓ in THF: 617 nm; Fp.: 165°C)

Analog zu den voranstehenden Beispielen werden die im folgenden aufgeführten Farbstoffe erhalten.

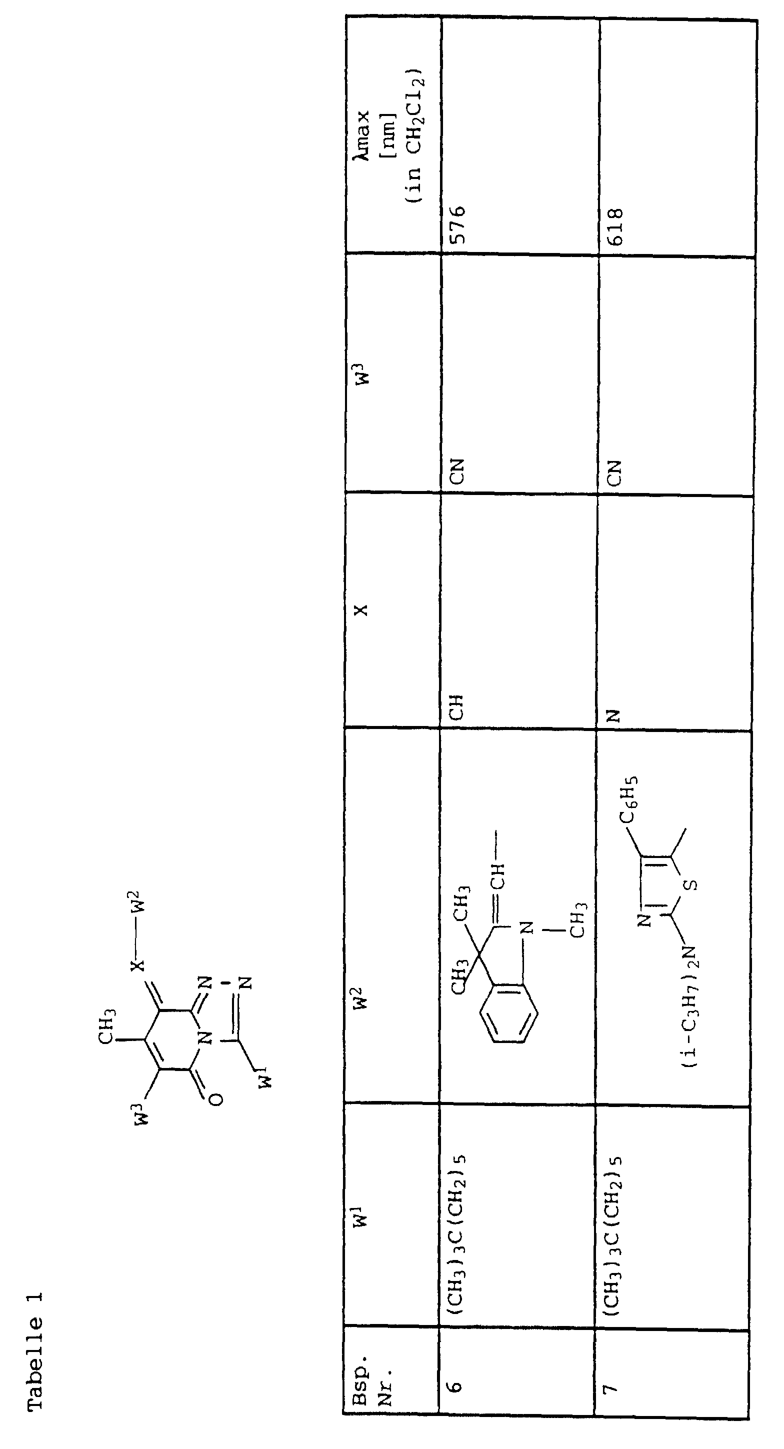

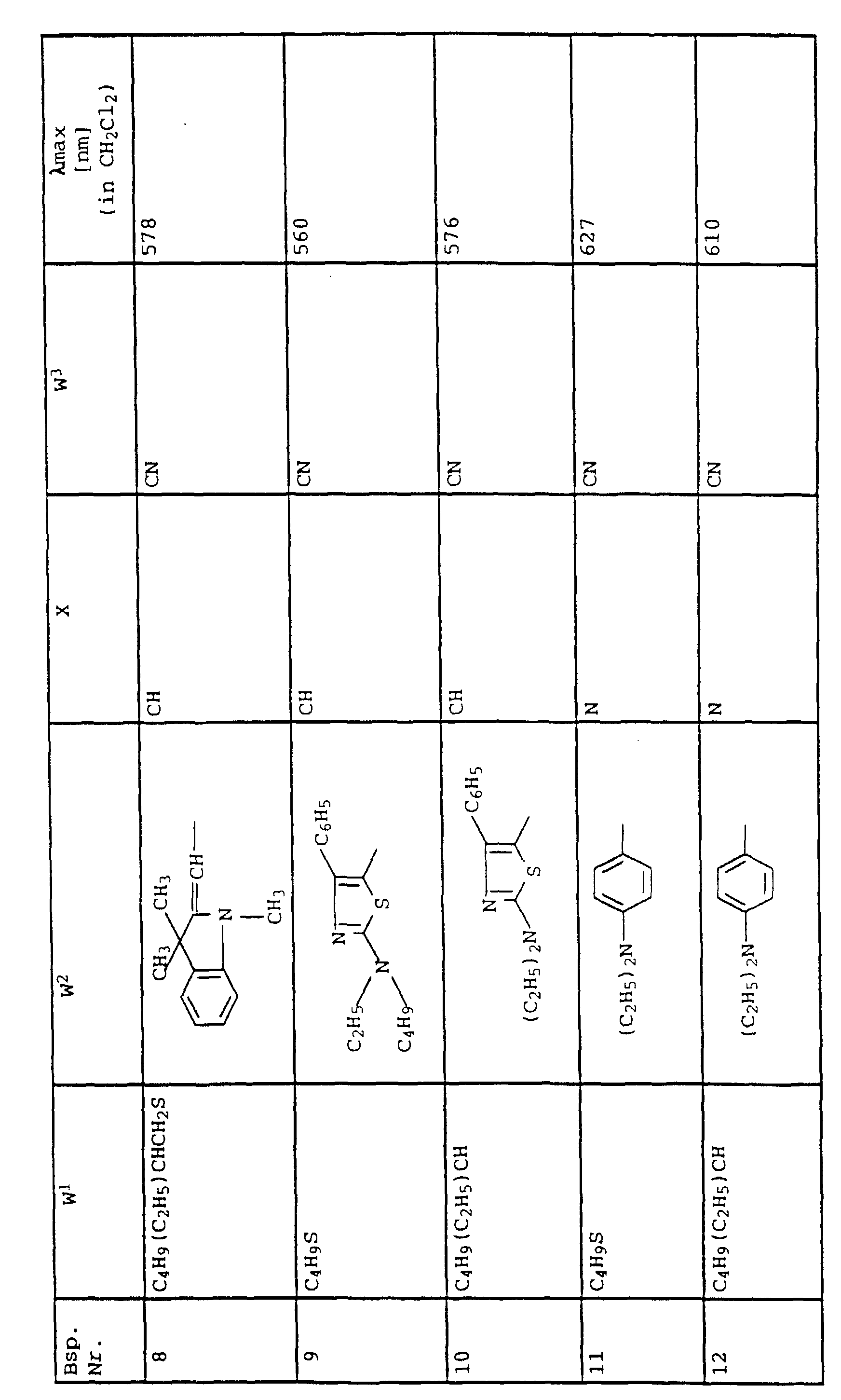

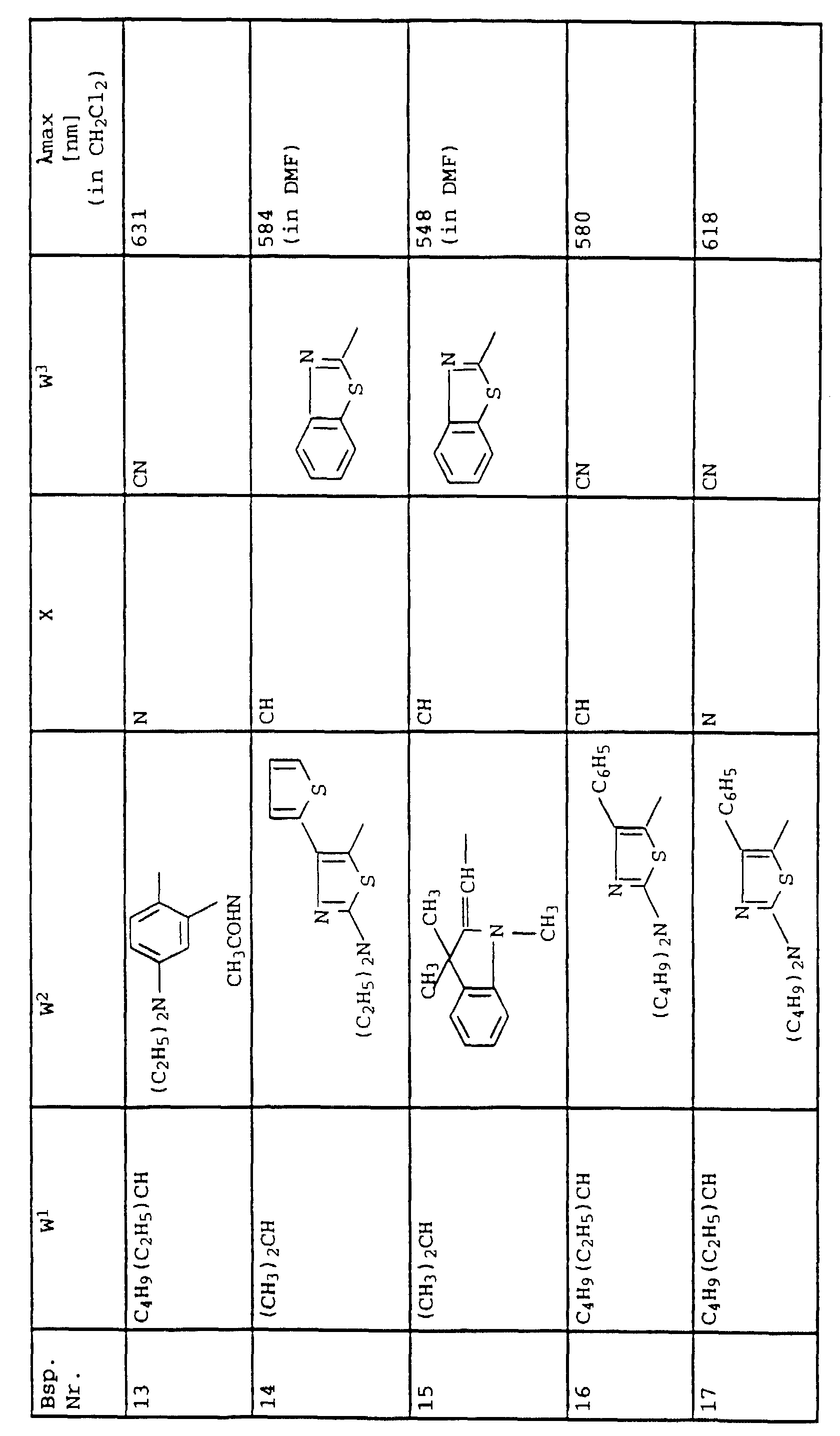

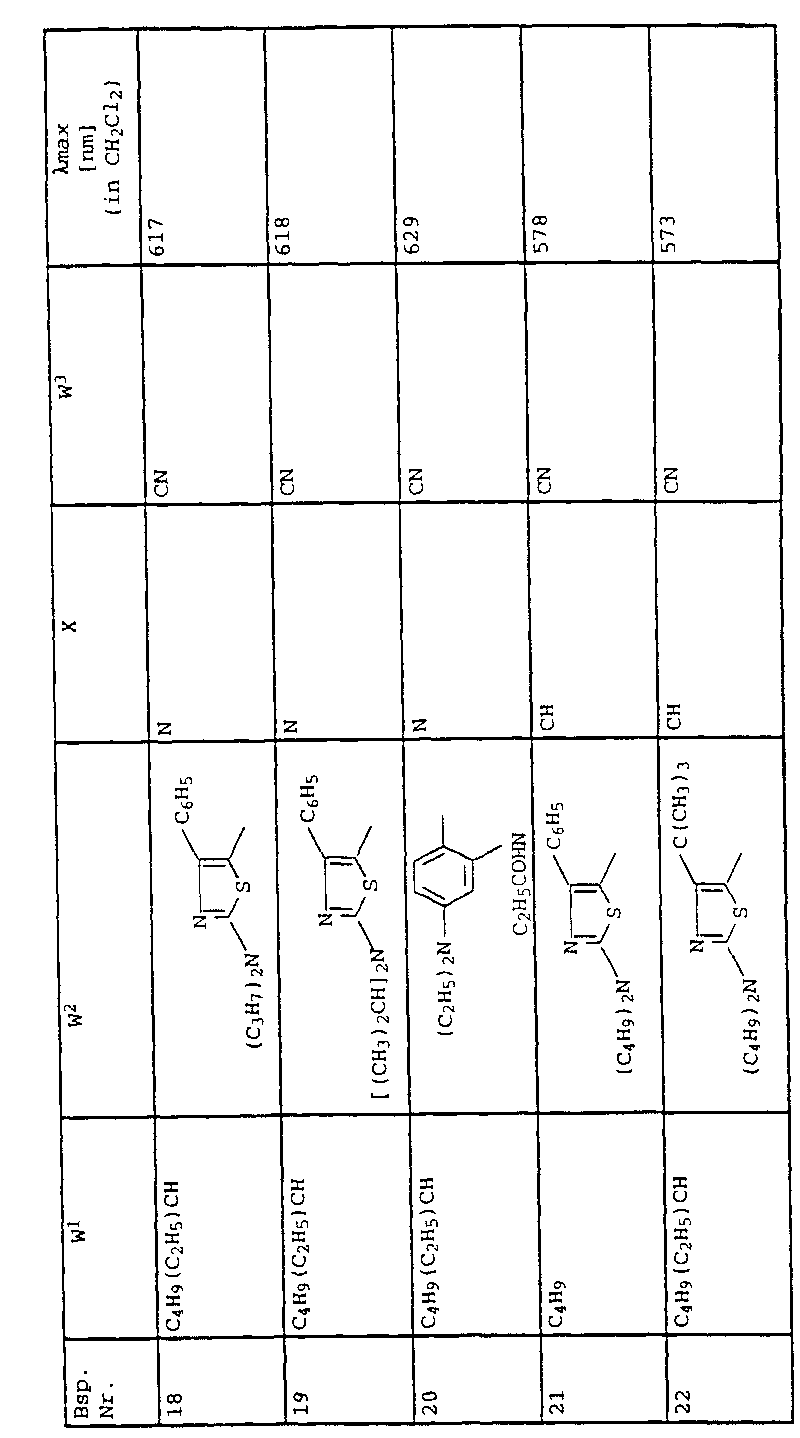

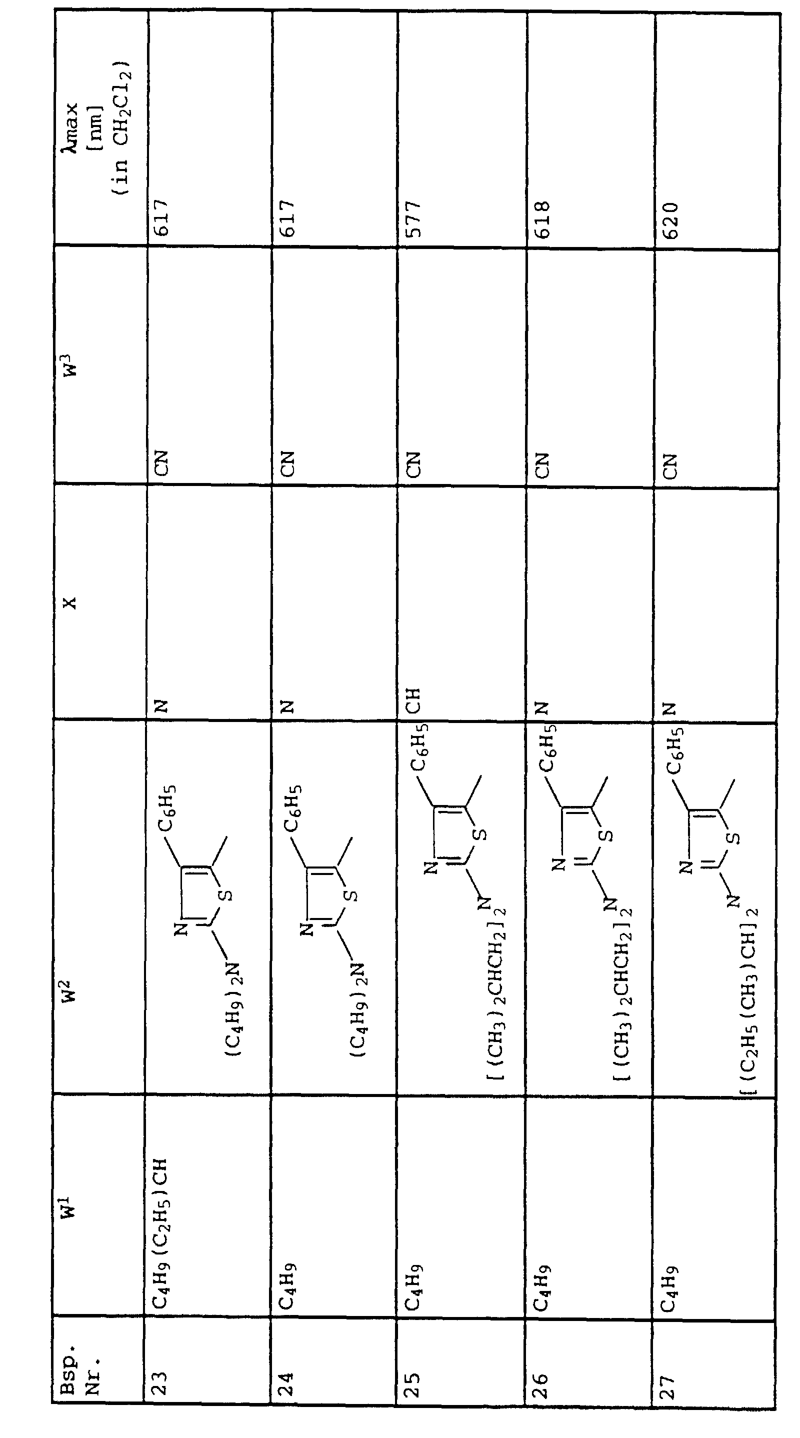

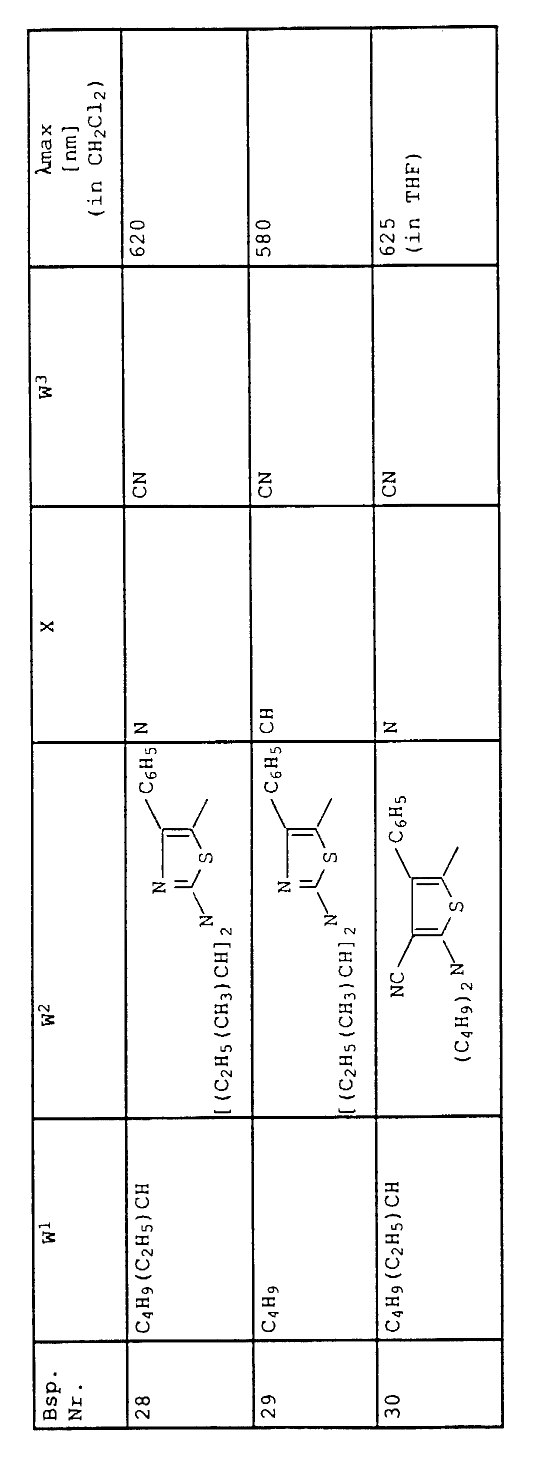

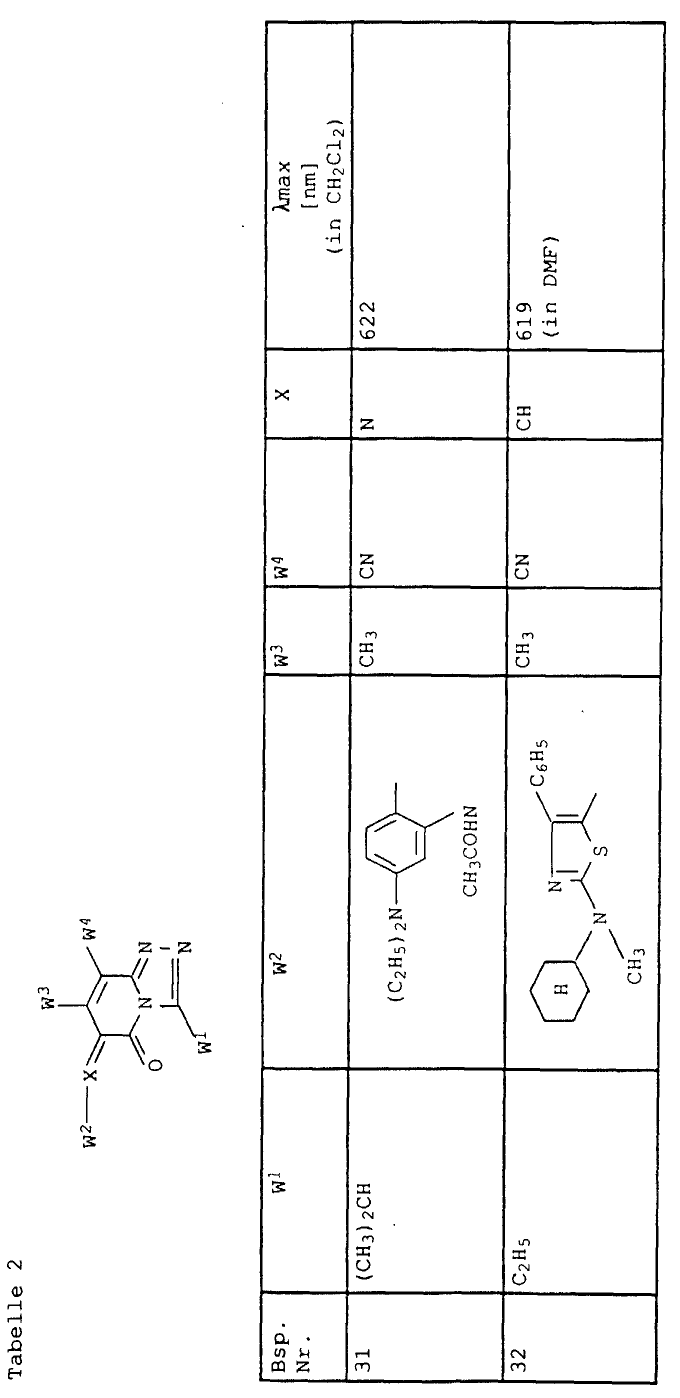

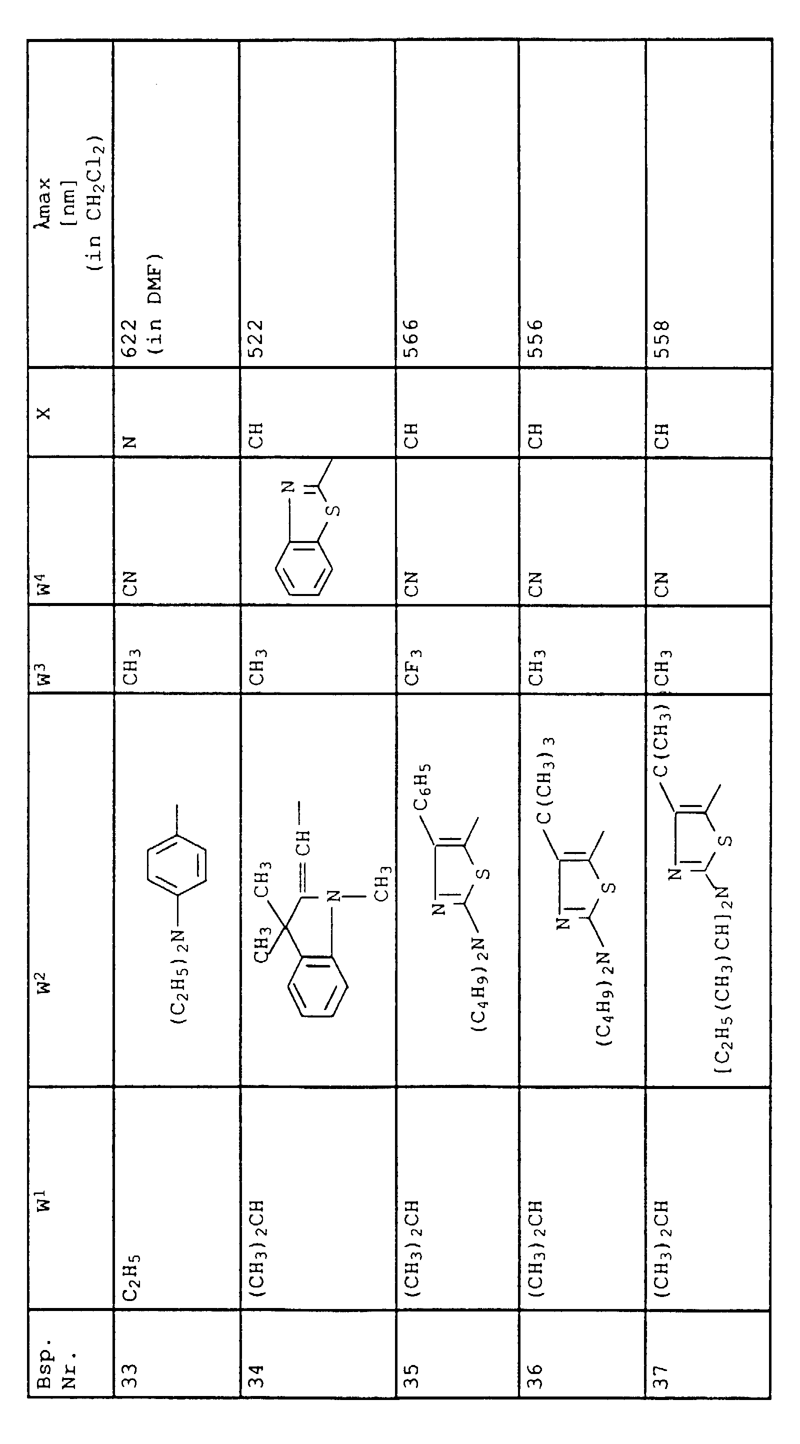

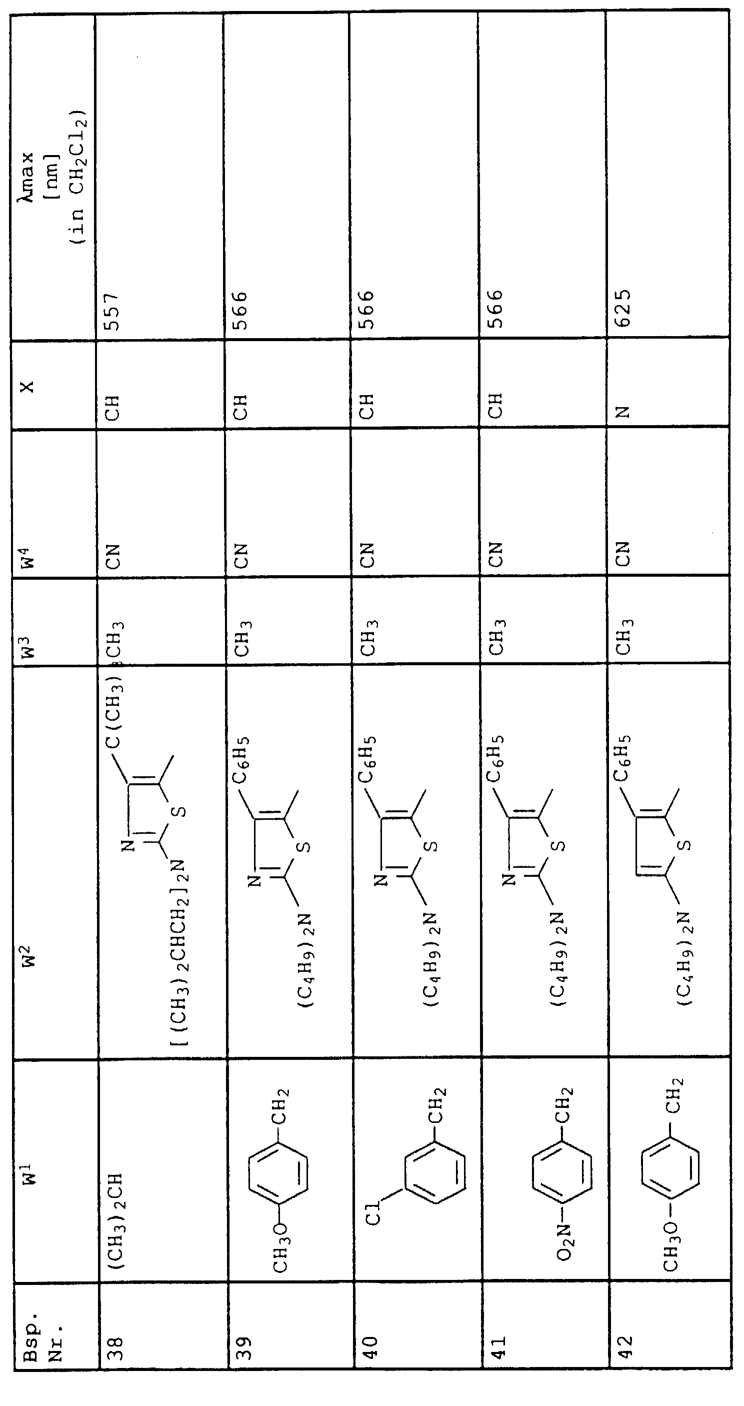

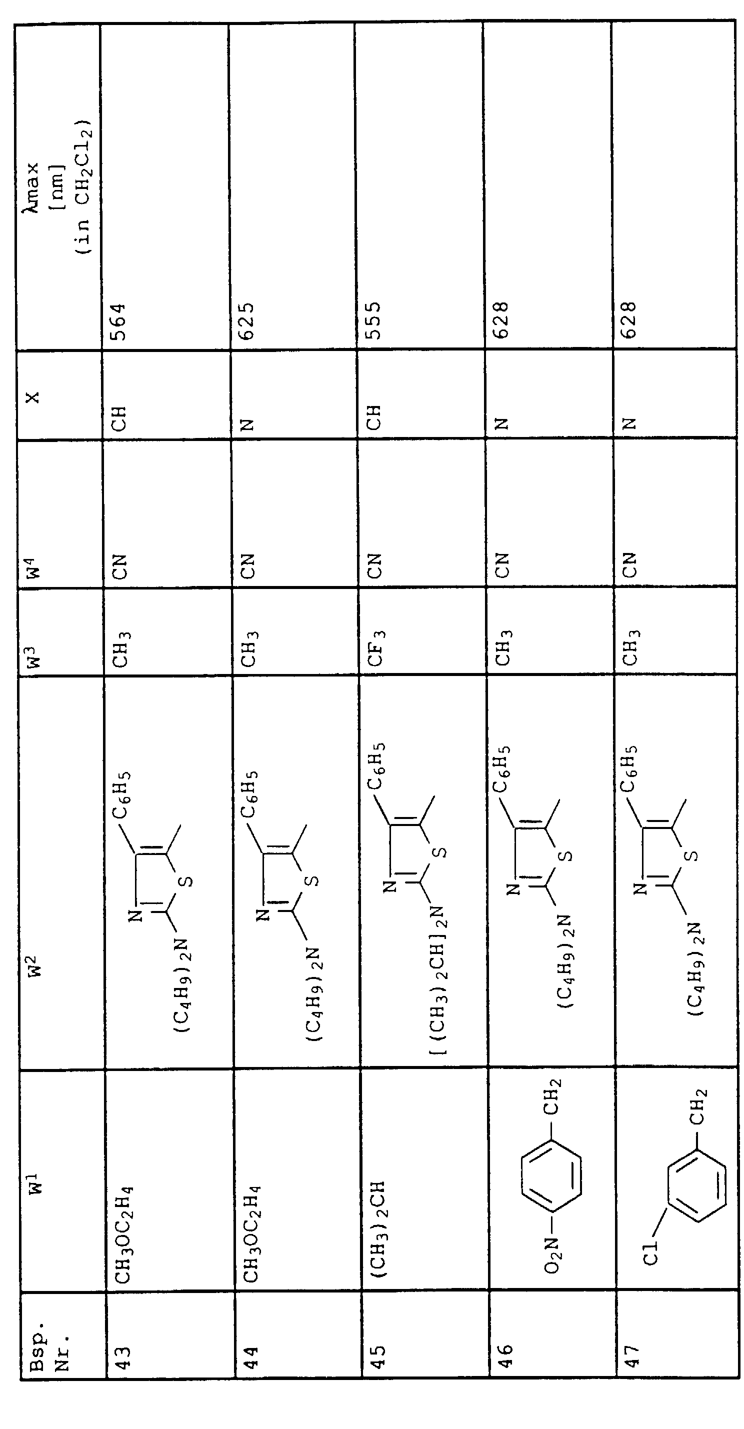

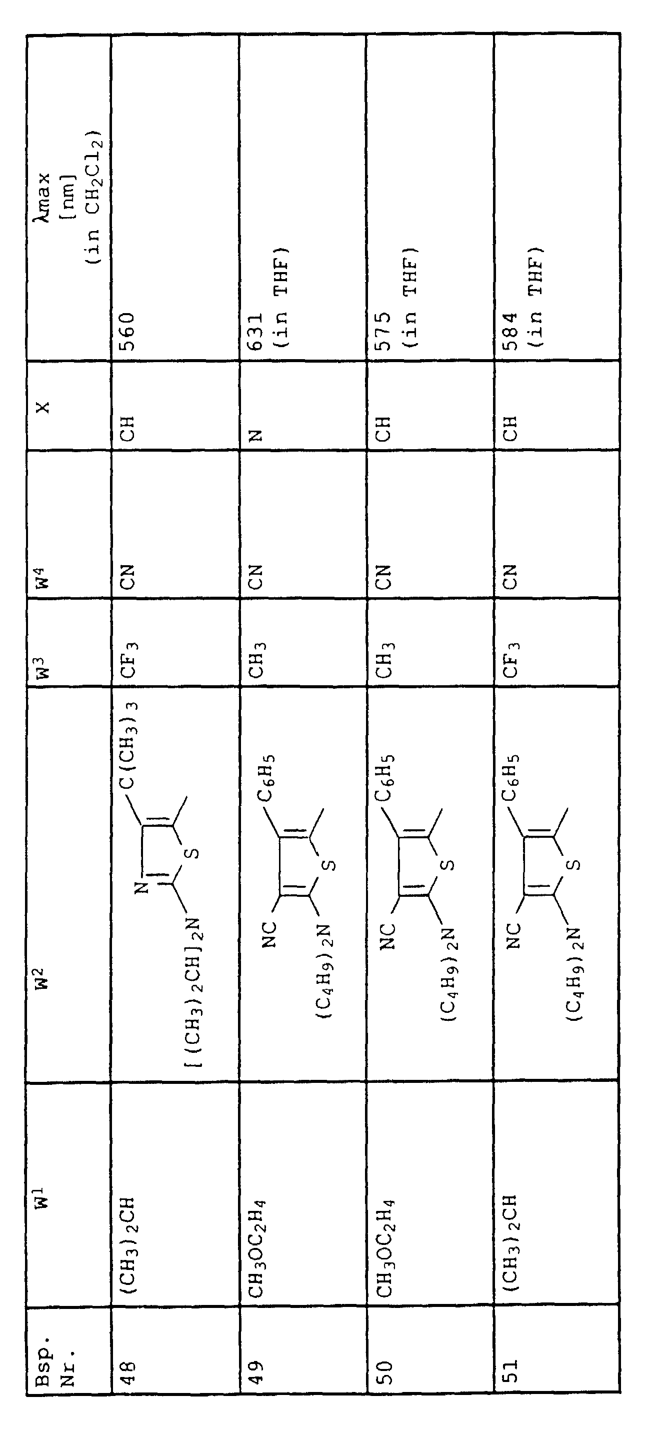

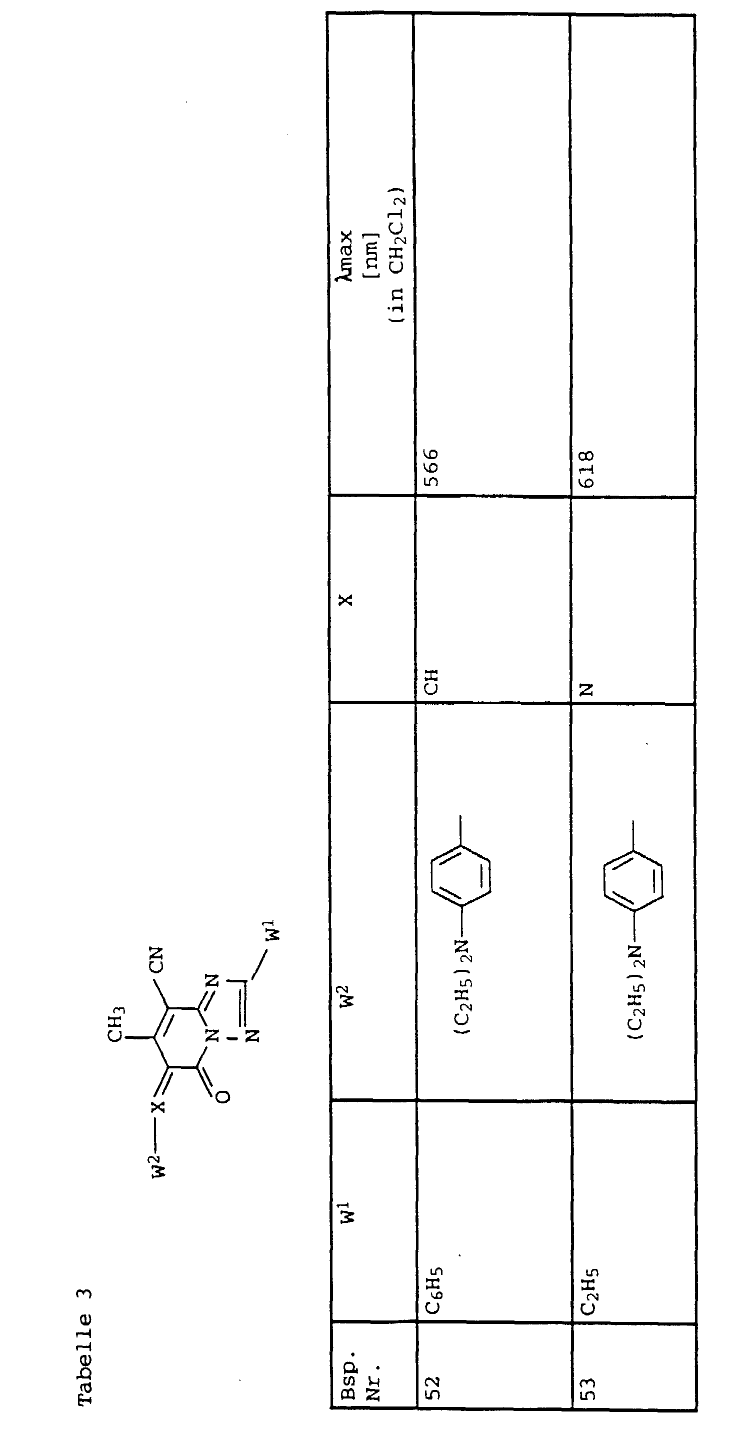

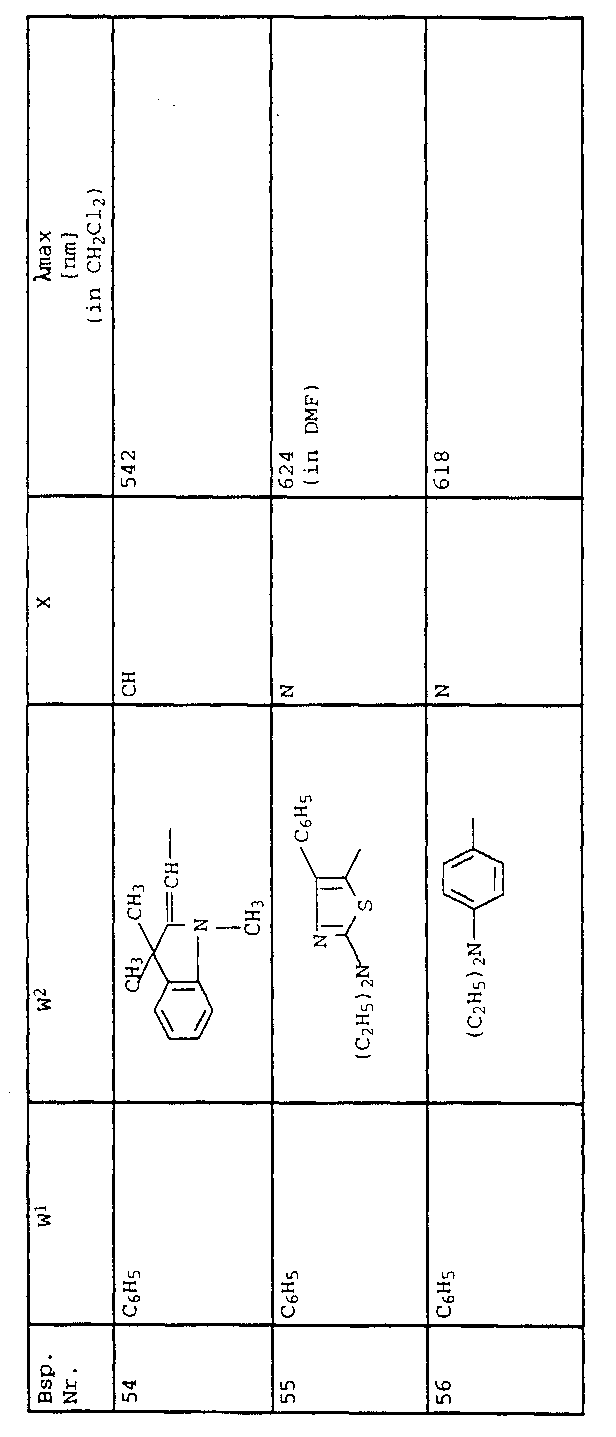

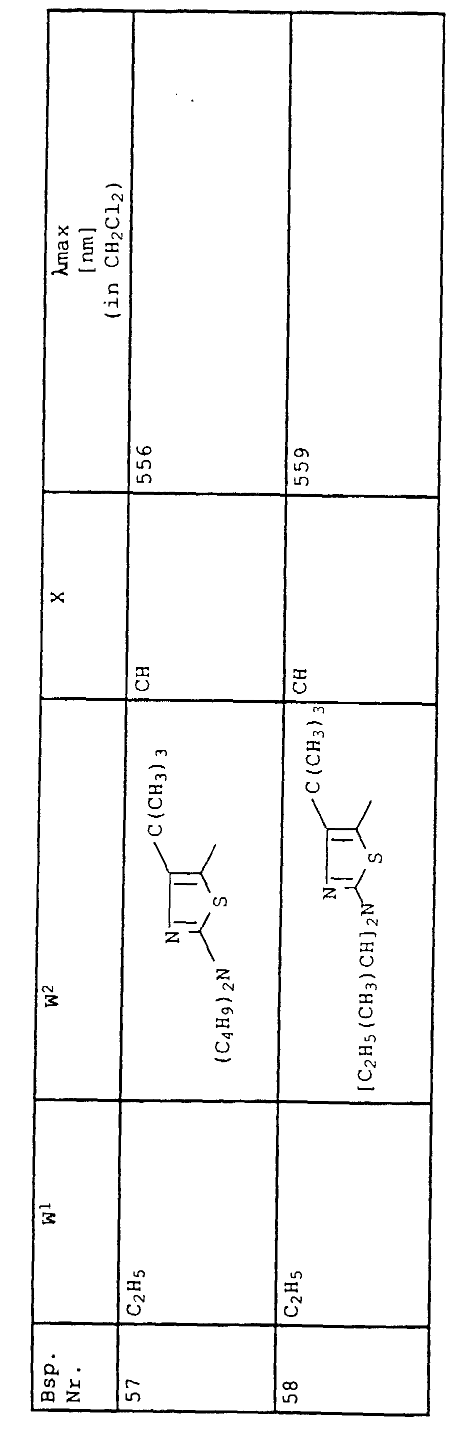

### B) Farbstofftransfer

Allgemeine Vorschrift:
a) 10 g Farbstoff werden, gegebenenfalls unter kurzzeitigem Erwärmen auf 80 bis 90°C, in 100 g einer 10 gew.%igen Lösung eines Bindemittels in ein Methylethylketon/Toluol/Cyclohexanon-Gemisch (4,5:2:2 v/v/v) eingerührt.
Die Druckfarbe wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf handelsüblichen Videoprintpapier (Typ VY-S der Firma Hitachi) verdruckt.
Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,7 und 2,0 mJ/Dot.
Da die Höhe der Anfärbung direkt proportional der zugeführten Energie ist, kann ein Farbkeil erzeugt und spektroskopisch ausgewertet werden.
Aus der graphischen Auftragung der Farbtiefe gegen die zugeführte Energie je Heizelement wird der Q*-Wert (= Energie in mJ für den Extinktionswert 1) und die Steigung m in 1/mJ ermittelt.
Die erhaltenen Ergebnisse sind in der folgenden Tabelle 4 aufgeführt.
(Bei den Angaben von Q* und m bezieht sich der erste Wert jeweils auf ein Bindemittel auf Basis von Polyester, der zweite jeweils auf ein Bindemittel auf Basis von Polyvinylbutyral.)

**Tabelle 4**

| Farbstoff Nr. | Q* [mJ/Dot] | m [1/mJ] |
|---|---|---|
| 1 | 0,93 | 2,48 |
| | - | - |
| 2 | 1,31 | 1,48 |
| | - | - |
| 3 | 0,96 | 2,42 |
| | 1,03 | 2,07 |
| 6 | 1,34 | 1,34 |
| | 1,34 | 1,34 |
| 7 | 1,20 | 1,54 |
| | 1,26 | 1,51 |
| 8 | 1,25 | 1,43 |
| | 1,34 | 1,45 |
| 9 | - | - |
| | 1,03 | 2,06 |
| 10 | - | - |
| | 1,07 | 1,83 |
| 11 | - | - |
| | 1,38 | 1,33 |
| 12 | - | - |
| | 1,69 | 0,95 |
| 16 | 0,94 | 2,55 |
| | 0,99 | 2,17 |
| 17 | 0,95 | 2,30 |
| | 1,01 | 2,04 |
| 18 | 0,97 | 2,34 |
| | 1,06 | 1,90 |
| 19 | 1,03 | 2,16 |
| | 1,06 | 1,96 |
| 21 | 1,14 | 1,73 |
| | 1,22 | 1,58 |
| 23 | 0,94 | 2,76 |
| | 0,95 | 2,26 |
| 24 | 1,03 | 2,22 |
| | 1,19 | 1,81 |
| 26 | 1,01 | 1,96 |
| | 1,03 | 1,87 |
| 27 | 0,99 | 2,08 |
| | 1,05 | 1,84 |
| 28 | 0,91 | 2,60 |
| | 1,00 | 2,05 |
| 29 | 1,01 | 2,09 |
| | 1,01 | 2,02 |
| 31 | 1,01 | 1,85 |
| | 1,20 | 1,58 |
| 35 | 0,97 | 2,67 |
| | 1,06 | 2,05 |
| 36 | 0,85 | 3,40 |
| | 0,93 | 2,55 |
| 37 | 0,88 | 3,08 |
| | 0,97 | 2,37 |
| 38 | 0,87 | 3,81 |
| | 0,94 | 2,54 |
| 40 | 1,10 | 1,87 |
| | 1,17 | 1,71 |
| 42 | 1,30 | 1,34 |
| | 1,28 | 1,34 |
| 43 | 1,00 | 2,17 |
| | 1,14 | 1,71 |
| 44 | 1,12 | 1,68 |
| | 1,21 | 1,54 |
| 45 | 0,88 | 3,11 |
| | 0,98 | 2,27 |
| 47 | 1,22 | 1,42 |
| | 1,25 | 1,42 |
| 57 | 0,94 | 2,84 |
| | 0,94 | 2,42 |
| 58 | 0,85 | 3,36 |
| | 0,95 | 2,48 |

c) Anwendung beim Färben
10 g Polyestergewebe werden bei einer Temperatur von 50°C in 200 ml einer Färbeflotte gegeben, die X Gew.-%, bezogen auf das Polyestergewebe, Farbstoff enthält und deren pH-Wert mittels Essigsäure auf 4,5 eingestellt ist. Man behandelt 5 min bei 50°C, steigert dann die Temperatur der Flotte innerhalb von 30 min auf 130°C, hält 60 min bei dieser Temperatur und läßt dann innerhalb von 20 min auf 60°C abkühlen.
Danach wird das ausgefärbte Polyestergewebe reduktiv gereinigt, indem man es 15 min in 200 ml einer Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 65°C behandelt. Schließlich wird das Gewebe gespült, mit verdünnter Essigsäure neutralisiert, nochmals gespült und getrocknet.
Die Farbstoffe 5, 7, 17 und 27 wurden jeweils in einer Menge (X) von 0,25 Gew.-% angewandt. Man erhielt jeweils hochbrillante grünstichig blaue Färbungen mit hervorragender Thermofixierechtheit.
Die Farbstoffe 1, 10 und 21 wurden jeweils in einer Menge (X) von 0,35 Gew.-% angewandt. Man erhielt jeweils violette Färbungen mit guten anwendungstechnischen Eigenschaften.

## Patentansprüche

1. Triazolopyridinfarbstoffe der Formel I 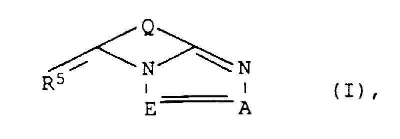 in der
A Stickstoff,
E einen Rest der Formel C-R¹, worin R¹ für C₁-C₂₀-Alkyl, das gegebenenfalls substituiert ist und durch 1 bis 4 Sauerstoffatome in Etherfunktion unterbrochen sein kann, gegebenenfalls substituiertes Phenyl, Mercapto oder gegebenenfalls substituiertes C₁-C₂₀-Alkylthio steht,
Q einen Rest der Formel 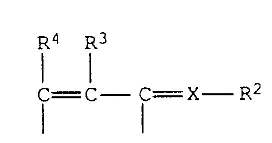 oder 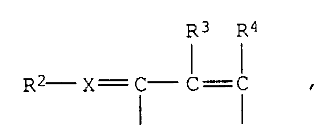 worin
R² für einen 5- oder 6-gliedrigen carbocyclischen oder heterocyclischen Rest, der benzoanelliert sein kann,
R³ für C₁-C₄-Alkyl, das gegebenenfalls durch ein Sauerstoffatom in Etherfunktion unterbrochen ist, C₁-C₄-Halogenalkyl, C₁-C₄-Alkoxycarbonyl oder gegebenenfalls substituiertes Phenyl,
R⁴ für Cyano, Carbamoyl, Carboxyl, C₁-C₄-Alkoxycarbonyl oder Benzthiazolyl oder R³ und R⁴ zusammen für den Rest eines anellierten Benzorings und
X für CH oder Stickstoff stehen, und
R⁵ Sauerstoff oder einen Rest der Formel C(CN)₂ , 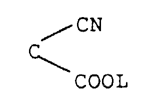 oder C(COOL)₂ bedeuten, wobei L jeweils für C₁-C₈-Alkyl, das gegebenenfalls durch 1 oder 2 Sauerstoffatome in Etherfunktion unterbrochen ist, steht,
mit der Maßgabe, daß wenn
Q den Rest der Formel 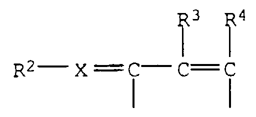 bedeutet, die beiden Reste A und E auch gegeneinander vertauscht sein können.

2. Triazolopyridinfarbstoffe nach Anspruch 1, dadurch gekennzeichnet, daß R⁴ für Cyano steht.

3. Triazolopyridinfarbstoffe nach Anspruch 1, dadurch gekennzeichnet, daß R³ für C₁-C₄-Alkyl steht.

4. Triazolopyridinfarbstoffe nach Anspruch 1, dadurch gekennzeichnet, daß R¹ für C₁-C₁₂-Alkyl, das gegebenenfalls durch C₁-C₆-Alkanoyloxy, C₁-C₈-Alkoxycarbonyl, dessen Alkylkette durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, oder gegebenenfalls substituiertes Phenyl steht.

5. Triazolopyridinfarbstoffe nach Anspruch 1, dadurch gekennzeichnet, daß R² sich von einer Komponente aus der Benzol-, Indol-, Chinolin-, Aminonaphthalin-, Pyrrol-, Aminothiazol-, Benzimidazol-, Benzthiazol-, Aminothiophen- oder Diaminopyridinreihe ableitet.

6. Verfahren zur Übertragung von Farbstoffen von einem Träger auf ein mit Kunststoff beschichtetes Papier durch Diffusion oder Sublimation mit Hilfe einer Energiequelle, dadurch gekennzeichnet, daß man einen Träger verwendet, auf dem sich ein oder mehrere Triazolopyridinfarbstoffe der Formel I gemäß Anspruch 1 befinden.

## Claims

1. A triazolopyridine dye of the formula I 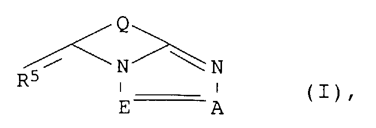 where
A is nitrogen,
E is a radical of the formula C-R¹, where R¹ is C₁-C₂₀-alkyl which is unsubstituted or substituted and can be interrupted by 1 to 4 oxygen atoms in ether functionalities, unsubstituted or substituted phenyl, mercapto or unsubstituted or substituted C₁-C₂₀-alkylthio,
Q is a radical of the formula 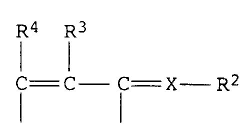 or 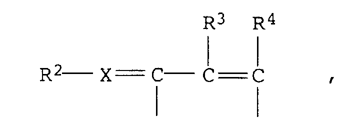 where
R² is a 5- or 6-membered carbocyclic or heterocyclic radical which can be benzo-fused,
R³ is C₁-C₄-alkyl which may be interrupted by an oxygen atom in an ether functionality, C₁-C₄-haloalkyl, C₁-C₄-alkoxycarbonyl or unsubstituted or substituted phenyl,
R⁴ is cyano, carbamoyl, carboxyl, C₁-C₄-alkoxycarbonyl or benzothiazolyl or R³ and R⁴ together are the remainder of a fused-on benzo ring and
X is CH or nitrogen, and
R⁵ is oxygen or a radical of the formula C(CN)₂ , 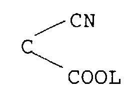 or C(COOL)₂
where L is in each case C₁-C₈-alkyl which may be interrupted by 1 or 2 oxygen atoms in ether functionalities,
with the proviso that when
Q is the radical of the formula 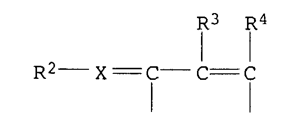 the two radicals A and E may also be mutually interchanged.

2. A triazolopyridine dye as claimed in claim 1, wherein R⁴ is cyano.

3. A triazolopyridine dye as claimed in claim 1, wherein R³ is C₁-C₄-alkyl.

4. A triazolopyridine dye as claimed in claim 1, wherein R¹ is C₁-C₁₂-alkyl which is unsubstituted or substituted by C₁-C₆-alkanoyloxy, C₁-C₈-alkoxycarbonyl whose alkyl chain can be interrupted by 1 or 2 oxygen atoms in ether functionalities, phenyl or C₁-C₄-alkylphenyl, and which can be interrupted by 1 or 2 oxygen atoms in ether functionalities, or unsubstituted or substituted phenyl.

5. A triazolopyridine dye as claimed in claim 1, wherein R² is derived from a component from the benzene, indole, quinoline, aminonaphthalene, pyrrole, aminothiazole, benzimidazole, benzothiazole, aminothiophene or diaminopyridine series.

6. A process for transferring dyes from a carrier to a plastic-coated paper by diffusion or sublimation with the aid of an energy source, wherein a carrier on which there are one or more triazolopyridine dyes of the formula I as claimed in claim 1 is used.

## Revendications

1. Colorants triazolopyridiniques de formule I 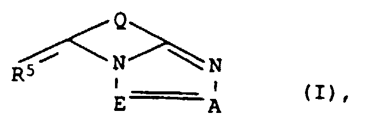 dans laquelle
A représente un atome d'azote,
E représente un reste de formule C-R¹, où R¹ est mis pour un groupement alkyle en C₁-C₂₀ éventuellement substitué et pouvant être interrompu par 1 à 4 atomes d'oxygène en liaison éther, un groupement phényle éventuellement substitué, un groupement mercapto ou alkylthio en C₁-C₂₀ éventuellement substitué,
Q représente un reste de formule 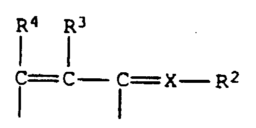 ou , 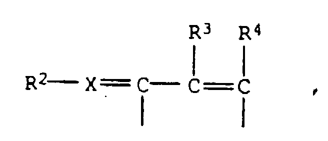 dans laquelle
R² est mis pour un reste hétérocyclique ou carbocyclique à 5 ou 6 maillons pouvant être benzocondensé,
R³ est mis pour un groupement alkyle en C₁-C₄ éventuellement interrompu par un atome d'oxygène en fonction éther, un groupement halogénoalkyle en C₁-C₄, alcoxycarbonyle en C₁-C₄ ou un groupement phényle éventuellement substitué,
R⁴ est mis pour un groupement cyano, carbamoyle, carboxyle, alcoxycarbonyle en C₁-C₄ ou benzothiazole ou bien R³ et R⁴ représentent ensemble un reste d'un cycle benzénique condensé et
X est mis pour CH ou pour un atome d'azote et
R⁵ est mis pour un atome d'oxygène ou un reste de formule C(CN)₂ , 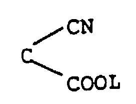 ou C(COOL)₂
où L représente à chaque fois un groupement alkyle en C₁-C₈ éventuellement interrompu par 1 ou 2 atomes d'oxygène en fonction éther,
étant spécifié que lorsque Q représente le reste de formule 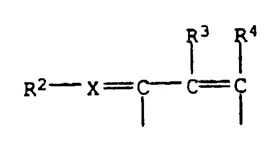 les deux restes A et E peuvent également être intervertis.

2. Colorants triazolopyridiniques selon la revendication 1, caractérisés en ce que R⁴ représente un groupement cyano.

3. Colorants triazolopyridiniques selon la revendication 1, caractérisés en ce que R³ représente un groupement alkyle en C₁-C₄.

4. Colorants triazolopyridiniques selon la revendication 1, caractérisés en ce que R¹ représente un groupement alkyle en C₁-C₁₂, pouvant être substitué par des groupements alcanoyloxy en C₁-C₆, alcoxycarbonyle en C₁-C₈, dont les chaînes alkyle peuvent être interrompues par 1 ou 2 atomes d'oxygène en fonction éther, des groupements phényle ou alkylphényle en C₁-C₄, et pouvant être interrompu par 1 ou 2 atomes d'oxygène en fonction éther, ou bien un groupement phényle éventuellement substitué.

5. Colorants triazolopyridiniques selon la revendication 1, caractérisés en ce que R² dérive d'un composant choisi dans les séries du benzène, de l'indole, de la quinoléine, de l'amoninaphtaline, du pyrrole, de l'aminothiazole, du benzimidazole, du benzothiazole, de l'aminothiophène ou de la diaminopyridine.

6. Procédé de transfert de colorants à partir d'un support sur un papier enduit de matière plastique, par diffusion ou sublimation à l'aide d'une source d'énergie, caractérisé en ce que l'on utilise un support sur lequel se trouvent un ou plusieurs colorants triazolopyridiniques de formule I selon la revendication 1.
